# EUROPÄISCHE PATENTSCHRIFT

(11) **EP 3 271 242 B1**
(45) Veröffentlichungstag und Bekanntmachung des Hinweises auf die Patenterteilung: **09.12.2020**
(21) Anmeldenummer: 16712010.4
(22) Anmeldetag: 21.03.2016
(51) Int. Cl.: B64C 1/20

(54) **MONTAGEEINRICHTUNG**
MOUNTING DEVICE
DISPOSITIF DE MONTAGE

(30) Priorität: 20.03.2015 DE 102015104230
(43) Veröffentlichungstag der Anmeldung: 24.01.2018
(73) Patentinhaber: Telair International GmbH, 83714 Miesbach (DE)
(72) Erfinder: HUBER, Thomas, 83727 Schliersee (DE); HOLZNER, Richard, 83071 Stephanskirchen (DE)
(74) Vertreter: Würmser, Julian
(86) Internationale Anmeldenummer: PCT/EP2016/056137
(87) Internationale Veröffentlichungsnummer: WO 2016/150908

(56) Entgegenhaltungen:
- EP-A1- 1 564 141
- WO-A1-2005/077755
- WO-A1-2013/135855
- CA-A1- 2 859 329
- DE-A1- 19 633 032
- GB-A- 2 417 619
- US-A1- 2013 340 601

## Beschreibung

Die Erfindung betrifft eine Montageeinrichtung, die dazu dient, Funktionseinrichtungen und dgl. wesentliche Elemente innerhalb eines Frachtraumes eines Flugzeuges zu montieren.

Im Frachtraum eines Flugzeugs ist eine Vielzahl von Funktionseinrichtungen montiert, z.B. Rollenbahnen, auf denen Behälter (ULDs), Paletten oder dergleichen im Frachtraum bewegt werden, Riegel zum Halten der Frachtstücke oder Verzurr-Einrichtungen, zum Verzurren von Frachtstücken. Alle diese Einrichtungen müssen mit stabilen tragenden Strukturen des Flugzeugs verbunden sein, also mit Querträgern, die mit Spanten des Flugzeugs verbunden sind oder mit den Spanten selbst. Auch eine Montage an Längsträgern ist ab und an notwendig.

Weiterhin muss Bedienungspersonal den Frachtraum betreten können. Hierfür müssen entsprechende Flächeneinheiten vorgesehen sein.

Die Montage der verschiedenen Funktionseinrichtungen ebenso wie diejenige der Flächeneinheiten ist aufwändig.

Aus der EP 1 646 558 B1 ist es bekannt, komplette Bodenmodule einschließlich der Funktionseinrichtungen und der tragenden Strukturen außerhalb des Flugzeugs zu montieren und dann in das Flugzeug einzubauen. Dies ist natürlich nicht möglich, wenn ein Flugzeugrumpf schon mit den tragenden Strukturen versehen ist.

Aus der WO 2013/135855 ist ein Frachtdeck eines Flugzeugs bekannt, bei dem Bodenpaneele an Querträgern des Frachtdecks befestigt sind. Ähnliches in einem Hubschrauber geht aus der US2013/340601 hervor, wobei hier eine Sandwichbauweise der Bodenpaneele offenbart wird. Weitere

Frachtdecks gehen aus der WO 2005/077755 A1, der GB 2 417 619 A sowie der EP 1 564 141 A1 hervor.

Ausgehend von der EP 1 646 558 B1, liegt der Erfindung die Aufgabe zu Grunde, eine Montageeinrichtung aufzuzeigen, mit deren Hilfe die Montage von Funktionseinrichtungen und auch Flächeneinheiten innerhalb eines Flugzeug-Frachtraumes vereinfacht wird. Ein Auswechseln von Funktionseinrichtungen und Austauschen gegen andere Funktionseinrichtungen soll ebenfalls erleichtert werden.

Diese Aufgabe wird durch eine Montageeinrichtung nach Anspruch 1 und ein Verfahren nach Anspruch 14 gelöst.

Ein wesentlicher Gedanke der Erfindung besteht darin, dass nicht jede Funktionseinrichtung und auch nicht jede Flächeneinheit innerhalb des Frachtraums gesondert montiert werden muss. Man kann vielmehr die Funktionseinrichtungen, welche im Bereich einer Flächeneinheit zu montieren sind, außerhalb des Flugzeugs an der Flächeneinheit vormontieren und dann die gesamte Flächeneinheit in das Flugzeug verbringen und dort die Funktionseinrichtungen an den dafür vorgesehenen Stellen mit den tragenden Strukturen verbinden.

Die Funktionseinrichtungen können an den Flächeneinheiten durch Verklebung befestigt sein. Es ist jedoch in den meisten Fällen einfacher und führt zu genaueren Ergebnissen, wenn die Funktionseinrichtungen derart ausgebildet sind, dass sie an den Flächeneinheiten durch Schraubeinrichtungen befestigbar sind. Die Schraubeinrichtungen sind hierbei auf einer, der Funktionseinrichtung gegenüberliegenden Seite der Flächeneinheit betätigbar, also mit einem Schlitz, einem Innensechskant usw. versehen. Dies hat den Vorteil, dass die Gewinde für die Befestigungsschrauben in den Funktionseinrichtungen angebracht sein können, die Flächeneinheiten also keine Gewindebuchsen oder dergleichen aufweisen müssen.

Die Flächeneinheiten sind vorzugsweise zur Bildung einer gas- und/oder wasserdichten Absperrung zwischen ihrer Oberseite und ihrer Unterseite ausgebildet. Dadurch kann verhindert werden, dass Flüssigkeiten in den Raum unterhalb der Flächeneinheiten eindringen. Weiterhin können die Räume ober- und unterhalb der Flächeneinheiten mit Halon zum Ersticken von Bränden gefüllt werden.

Die Flächeneinheit kann Dichtlippen umfassen, die an Rändern der Flächeneinheit angeordnet sind. Diese Dichtlippen können dazu verwendet werden, die Bilge des Flugzeugs gas- und/oder wasserdicht abzudichten. Weiterhin können sie eine gas- und/oder wasserdichte Verbindung zu benachbarten Bauteilen, z.B. Wandpanelen und/oder weiteren Flächeneinheiten von weiteren Montageeinrichtungen herzustellen. In einer Ausführungsform hat die Montageeinrichtung eine umlaufende Dichtlippe.

Vorzugsweise sind die Flächeneinheiten zur Bildung eines begehbaren Bodens ausgebildet. Sie dienen also gleichzeitig verschiedenen Zwecken, einerseits als Montagehilfe für die Funktionseinrichtungen, andererseits als "Bodenelemente" und - wie zuvor beschrieben - als Gas- und Wassersperren.

Die Flächeneinheiten können z.B. aus Feuerschutzgründen aus einem Metallblech gefertigt werden. Vorzugsweise werden die Flächeneinheiten aus faserverstärktem Kunststoffmaterial in Sandwichbauweise aufgebaut, wie dies an sich bekannt ist. Derartiges Material ist leicht und dennoch sehr stabil.

In den Abschnitten, an denen die Funktionseinheiten montierbar oder montiert sind, sind vorzugsweise Verstärkungseinrichtungen im Material der Flächeneinheiten vorgesehen. Insbesondere sind dies Verstärkungen gegenüber Kräften, die senkrecht zur Oberfläche der Flächeneinheit wirken. Ebenso sind dies Verstärkungen gegenüber Biegemomenten, welche durch belastende Kräfte entstehen, die auf die Funktionseinrichtungen einwirken. Wenn also die Flächeneinheiten als Sandwich-Bauteile aufgebaut sind, welche hochstabile Oberflächen aufweisen, zwischen denen ein Schaumstoffkern liegt, so sind derartige Bauteile sehr leicht. Dann aber, wenn hohe Andruckkräfte wie bei der Montage (oder Belastung) der Funktionseinrichtungen auftreten, kann ein Zusammendrücken des Materials passieren. Dem wird dadurch entgegengewirkt, dass eben die genannten Verstärkungen vorgesehen sind, so z.B. der Schaumstoffkern durch Vollmaterial ersetzt wird. Natürlich ist es auch möglich, an den interessierenden Stellen die Struktur der Flächeneinheit insgesamt zu verändern, z.B. also Einsenkungen (mit erhöhter Flächenstabilität) vorzusehen.

Die Flächeneinheiten können einen Hybridkern mit mindesten einer, vorzugsweise kunstharzdurchsetzten, Schaumstoffschicht umfassen, die zwischen einer ersten Kernschicht aus faserverstärktem Kunststoff und einer zweiten Kernschicht aus faserverstärktem Kunststoff eingelagert ist. Die Flächeneinheit kann einen oder mehrere schaumstofffreie Randbereiche zur Herstellung einer, insbesondere flächigen, stoffschlüssigen Verbindung zwischen den Kernschichten, umfassen. Alternativ oder zusätzlich kann die Dicke der Schaumstoffschicht in einem Übergangsbereich zu dem Randbereich hin abnehmen. Die Randbereiche können bevorzugt dazu eingesetzt werden, um die Flächeneinheit mit der Struktur des Flugzeugs zu verbinden.

In einer Ausführungsform umfasst die erste und/oder zweite Kernschicht Glasfasern, insbesondere S-Glas. Die Kernsicht, die im Eingebauten Zustand unten liegt, weist vorzugsweise mindestens eine (engmaschige) mulitaxiale Kohlenstofffaserschicht auf, die als Brandbarriere dienen kann.

Ein möglicher Aufbau (von oben nach unten) könnte folgende Schichten umfassen:
- Erste Kernsicht mit ca. 1 - 1,2 mm glasfaserverstärktem Kunststoff, z.B. mittels S-Glass;
- Schaumstoffkern, vorzugsweise harzdurchtränkt;
- Zweite Kernschicht mit ca. 0,2-0,4 mm glasfaserverstärktem Kunststoff (oben, nahe am Kern) und ca. Ca. 0,2-0,4 mm glasfaserverstärktem Kunststoff, z.B. mittels S-Glass (unten, vom Kern abgewandt).

Der glasfaserverstärktem Kunststoff sorg für eine erhöhte Schlagresistenz.

An dem schaumstofffreien Randbereich bzw. an den Randbereichen schließt sich vorzugsweise vollumfänglich, insbesondere innenumfänglich, ein Übergangsbereich an, welcher sowohl Schaumstoff, als auch faserverstärkten Kunststoff, insbesondere glasfaserverstärkten Kunststoff, vorzugsweise mittels S-Glas, aufweist.

Der Hybridkern kann in einer Ausführungsform derart ausgebildet sein, dass vollumfangsseitig ein (schaumstofffreier) Randbereich ausgebildet ist, an welchen sich in Richtung der Hybridkern-Mitte ein Übergangsbereich anschließt.

Die Dicke der Schaumstoffschicht nimmt im Übergangsbereich in Richtung des (schaumstofffreien) Randbereichs kontinuierlich und/oder schrittweise ab. In anderen Worten wird die Dicke der Schaumstoffschicht in Richtung des (schaumstofffreien) Randbereiches demnach in Richtung der Außenkante des Hybridkerns geringer.

Die Dicke eines faserverstärkten Kunststoffs und/oder eine Lagenanzahl von Faserlagen in dem/einem Übergangsbereich nimmt zu dem Randbereich hin in einer Ausführungsform zu. Beispielsweise kann die Dicke des Kunststoffs bzw. der Kunststoffschicht pro Längeneinheit um mindestens 3 % zunehmen.

Vorzugsweise ist die Dicke bzw. die Gesamtdicke des Hybridkerns im Übergangsbereich konstant, wobei die Volumen-Anteile der Schaumstoffschicht und des faserverstärkten Kunststoffes gegenläufig ab- bzw. zunehmen. Es ist auch möglich, dass die Dicke der Schaumstoffschicht kontinuierlich abnimmt und die Dicke des faserverstärkten Kunststoffs im Übergangsbereich schrittweise zunimmt. Auch die gegenteilige Ausführung, also eine schrittweise Abnahme hinsichtlich der Schaumstoffschichtdicke und eine kontinuierliche Zunahme der faserverstärkten Kunststoff-Dicke auf den Rand zu ist denkbar.

Aufgrund der Ausbildung eines Übergangsbereichs mit variabler Dicke der Schaumstoffschicht sowie variabler Dicke des faserverstärkten Kunststoffs, treten bei einer Verbindung der erfindungsgemäßen Flächeneinheit mit der Flugzeugstruktur keine Bruchkanten auf. Vorzugsweise wird die Montageeinrichtung im Bereich der Randbereiche und/oder in gemäß den Randbereichen ausgestalteten Montagebereichen bzw. Montageabschnitten und/oder in gemäß den Randbereichen ausgestalteten Auflagebereichen bzw. Auflageabschnittten mit der Flugzeugstruktur verbunden.

Der/ein Übergangsbereich und der Randbereich umfassen Randfaserlagen, insbesondere mindestens zwei oder vier Randfaserlagen, die die erste Kernschicht im Übergangsbereich und/oder im Randbereich abschnittsweise überdecken.

Der faserverstärkte Kunststoff des/eines Übergangsbereiches kann aus mehreren Faserlagen und/oder aus mehreren Schichten bestehen, die vorzugsweise derart übereinander angeordnet sind, dass die Dicke des faserverstärkten Kunststoffs in Richtung des (schaumstofffreien) Randbereichs kontinuierlich und/oder schrittweise zunimmt.

Der faserverstärkte Kunststoff des Übergangsbereichs kann beispielsweise aus der ersten und/oder zweiten Kernschicht des Hybridkerns gebildet werden. Des Weiteren ist es denkbar, dass der faserverstärkte Kunststoff des Übergangsbereichs aus mindestens einer, vorzugsweise mehrerer, zusätzlich angeordneter bzw. eingelagerter Kernschichten und/oder Faserlagen gebildet wird.

Es ist möglich, dass der faserverstärkte Kunststoff durch die zweite Kernschicht aus faserverstärktem Kunststoff gebildet wird. In diesem Fall ist es denkbar, dass die zweite Kernschicht um die kunstharzdurchsetzte Schaumstoffschicht nach unten in Richtung der ersten Kernschicht geführt und umgeschlagen wird. Mittels Wicklung und/oder Faltung des Endabschnitts der zweiten Kernschicht und/oder Faserlagen der zweiten Kernschicht unterhalb der Schaumstoffschicht, also zwischen der Schaumstoffschicht und der ersten Kernschicht, kann eine derartige faserverstärkte Kunststoffschicht bzw. ein derartiger faserverstärkter Kunststoff gebildet werden, dessen Dicke zu dem (schaumstofffreien) Randbereich hin kontinuierlich und/oder schrittweise zunimmt.

Des Weiteren ist es erfindungsgemäß möglich, dass mehrere, vorzugsweise oberhalb der Schaumstoffschicht angeordnete bzw. eingelagerte Faserlagen nach unten, d.h. in Richtung der ersten Kernschichten geführt werden und um die Schaumstoffschicht umgeschlagen werden. In anderen Worten werden die Endabschnitte mehrerer oberhalb der Schaumstoffschicht angeordneten bzw. eingelagerten Faserlagen zwischen der Schaumstoffschicht und der ersten Kernschicht angeordnet. Die umgeschlagenen bzw. umgeklappten Faserlagen weisen diesbezüglich unterschiedliche Längen auf, so dass die zusätzlichen Faserlagen derart übereinander angeordnet werden, dass die Dicke des faserverstärkten Kunststoffs des Übergangsbereichs zu dem (schaumstofffreien) Randbereich hin kontinuierlich und/oder schrittweise zunimmt. Demnach nehmen die Längen der zusätzlichen Faserlagen gemäß umgeschlagener Anordnung in Richtung der Auflageschicht, welche die Unterseite der Flächeneinheit definiert, zu.

Die Randfaserlagen, bei welchen es sich vorzugsweise um glasfaserverstärkte Kunststoffe handelt, können im Übergangsbereich zumindest abschnittsweise zwischen der ersten Kernschicht und der Schaumstoffschicht eingelagert sein. Vorzugsweise sind sie aus Faserstreifen hergestellt. Die Streifenbreiten der Randfaserlagen nehmen vorzugsweise zur Oberseite der Flächeneinheit hin ab.

Beispielsweise können die Randfaserlagen zur Bildung von Randstreifen oder eines die Flächeneinheit umfassenden Rahmens angeordnet sein.

Die Randstreifen erstrecken sich im eingebauten Zustand der Montageeinrichtung vorzugsweise entlang der Längsrichtung (X-Achse) des Flugzeugs. Eine Flächeneinheit kann wechselseitig jeweils einen Randstreifen zur Befestigung der Flächeneinheit an der Flugzeugstruktur aufweisen.

In einem Ausführungsbeispiel weist der Hybridkern mindestens eine erste Randfaserlage aus faserverstärktem Kunststoff, insbesondere kohlenstofffaserverstärkten Kunststoff, auf, die zwischen der ersten Kernschicht und der Schaumstoffschicht eingelagert ist und streifenförmig zumindest abschnittsweise die Randabschnitte der ersten Kernschicht bedeckt. Demnach ist die erste Randfaserlage aus mehreren, insbesondere vier, Faserstreifen gebildet, welche die Randstreifen bilden, und welche lediglich auf den Randabschnitten der ersten Kernschicht angeordnet sind.

Weiterhin kann der Hybridkern mindestens eine zweite Randfaserlage aus faserverstärktem Kunststoff, insbesondere kohlenstofffaserverstärktem Kunststoff, umfassen, die zwischen der ersten Randfaserlage und der Schaumstoffschicht eingelagert ist und streifenförmig zumindest abschnittsweise die äußeren Randabschnitte der ersten Randfaserlage bedeckt, wobei die Streifenbreite der zweiten Randfaserlage geringer als die Streifenbreite der ersten Randfaserlage ist. In anderen Worten sind die Faserstreifen der ersten Randfaserlage abschnittsweise von Faserstreifen der zweiten Randfaserlage bedeckt. Da die Streifenbreite der zweiten Randfaserlage geringer als die Streifenbreite der ersten Randfaserlage ist, werden die Faserstreifen der ersten Randfaserlage nur teilweise bedeckt.

Des Weiteren kann der Hybridkern mindestens eine dritte Randfaserlage aus faserverstärktem Kunststoff, insbesondere kohlenstofffaserverstärktem Kunststoff, umfassen, wobei die dritte Randfaserlage zwischen der zweiten Randfaserlage und der Schaumstoffschicht eingelagert ist und streifenförmig zumindest abschnittsweise die äußeren Randabschnitte der zweiten Randfaserlage bedeckt, wobei die Streifenbreite der dritten Randfaserlage geringer als die Streifenbreite der zweiten Randfaserlage ist. In anderen Worten werden die Faserstreifen der zweiten Randfaserlage von Faserstreifen der dritten Randfaserlage abschnittsweise bedeckt. Da die Streifenbreite der dritten Randfaserlage geringer als die Streifenbreite der zweiten Randfaserlage ist, bedecken die Faserstreifen der dritten Randfaserlage die Faserstreifen der zweiten Randfaserlage nur teilweise.

Des Weiteren kann der Hybridkern mindestens eine vierte Randfaserlage aus faserverstärktem Kunststoff, insbesondere kohlenstofffaserverstärktem Kunststoff, umfassen, wobei die vierte Randfaserlage zwischen der dritten Randfaserlage und der Schaumstoffschicht eingelagert ist und streifenförmig zumindest abschnittsweise die äußeren Randabschnitte der dritten Randfaserlage bedeckt, wobei die Streifenbreite der vierten Randfaserlage geringer als die Streifenbreite der dritten Randfaserlage ist. In anderen Worten werden die Faserstreifen der dritten Randfaserlage durch die Faserstreifen der vierten Randfaserlage zumindest abschnittsweise bedeckt. Da die Streifenbreite der vierten Randfaserlage geringer als die Streifenbreite der dritten Randfaserlage ist, werden die Faserstreifen der dritten Randfaserlage nur teilweise von den Faserstreifen der vierten Randfaserlage bedeckt.

Die Lagenanzahl der Flächeneinheit muss nicht zwangsläufig in (jedem) Randbereich oder in (jedem) Montagebereich oder in (jedem) Auflagebereich zunehmen. Es ist erfindungsgemäß möglich hier nur wenige Lagen mehr vorzusehen, so dass sich beim Verbinden auf Grund des fehlenden Schaumstoffkerns bzw. der fehlenden Schaumstofflage ein Höhenprofil mit sich unterscheidenden Höhen ergibt. Beispielsweise kann die Flächeneinheit in Bereichen in denen kein Schaumstoff eingelegt ist, eine Dicke haben, die um mindestens 30%, insbesondere um mindestens 50%, geringer ist als die Dicke im Bereich mit dem Schaumstoff.

Bei den Randfaserlagen kann es sich um multiaxiale Gewebe und/oder Gelege handeln. Vorzugsweise sind es biaxiale Gewebe oder Gelege.

Der Hybridkern kann des Weiteren mindestens eine fünfte, insbesondere mindestens eine sechste, insbesondere mindestens eine siebte usw., Randfaserlage umfassen.

Auf der der Auflageschicht abgewandten Seite des Schaumstoffs können mindestens zwei Faserlagen, vorzugsweise drei Faserlagen, aus Kunststoff, insbesondere kohlenstofffaserverstärktem Kunststoff, angeordnet sein, welche unterschiedliche Faserausrichtungen aufweisen. In anderen Worten umfasst die zweite Kernschicht mindestens zwei Faserlagen, vorzugsweise drei Faserlagen, welche unterschiedliche Faserausrichtungen aufweisen, wobei sich eine erste Faserausrichtung einer Faserlage vorzugsweise um mindestens 20 Grad oder um mindestens 30 Grad oder um mindestens 40 Grad oder um mindestens 45 Grad und um maximal 90 Grad von einer zweiten Faserausrichtung einer weiteren Faserlage unterscheidet. Bei den Winkelangaben kann es sich um absolute Winkel handeln. Der Absolutwinkel kann dabei derart definiert sein, dass dieser der kleinste absolute Winkelwert zwischen zwei Faserausrichtungen ist.

Sofern drei Faserlagen vorgesehen sind bzw. verwendet werden, sind vorzugsweise zwei der Faserlagen, welche nicht direkt übereinander angeordnet sind, vorzugsweise derart ausgebildet, dass diese übereinstimmende Faserausrichtungen aufweisen. Eine weitere, zwischen den beiden Faserlagen mit gleicher Faserausrichtung angeordnete Faserlage weist hingegen eine zweite Faserausrichtung auf, welche sich um mindestens 20 Grad oder um mindestens 30 Grad oder um mindestens 40 Grad oder um mindestens 45 Grad und um maximal 90 Grad von der ersten Faserausrichtung der beiden Faserlagen unterscheidet.

Mindestens eine Faserlage und/oder Kernschicht der Flächeneinheit kann ein Fasernetz aus Kohlenstofffasern und/oder Glasfasern und/oder Aramidfasern umfassen. Die Fasern innerhalb eines Fasernetzes können zueinander im Wesentlichen rechtwinklig verlaufen, so dass sich ein Gitternetz ergibt. Demnach kann es sich bei mindestens einer Faserlage um ein biaxiales Gelege oder Gewebe handeln. Auch beliebig andere multiaxiale Gewebe oder Gelege können verwendet werden. Eine entsprechende Faserlage und/oder Kernschicht ist besonders haltbar. Auch die Faserlagen mit Fasernetzen können derart angeordnet sein, dass sich die Faserausrichtungen zweier Faserlagen um 20 oder 30 oder 40 oder 45 und um maximal 90 Grad unterscheiden. Auch diese Winkelangaben können als Absolutwinkel verstanden werden.

Vorzugsweise sind die einzelnen Schichten des Hybridkerns sowie die Schaumstoffschicht durch Stoffschluss miteinander verbunden. Üblicherweise wird eine Verbindung der Schichten sowie der Schaumstoffschicht durch Kunstharz hergestellt. Vorzugsweise weist die Schaumstoffschicht die bereits beschriebene Stützstruktur bzw. Brückenstruktur auf, die sich im Wesentlichen senkrecht zu der Faserausrichtung bzw. den Faserausrichtungen der ersten und der zweiten Kernschicht erstreckt.

Die Flächeneinheit ist gemäß vorliegender Erfindung derart ausgebildet, dass das Gewicht der Montageeinrichtung dadurch zu reduzieren, dass die Flächeneinheit aus mehreren Schichten, insbesondere in einer Sandwich-Bauweise, hergestellt wird. Für die Schichten werden vorzugsweise Materialien aus Kunststoff verwendet. Hierbei werden gegebene Anforderungen, z.B. gute Reib- und Verschleißverhältnisse, berücksichtigt, wobei ein insgesamt sehr stabiler Verbundwerkstoff oder Komposit-Werkstoff bereitgestellt wird.

In einer Ausführungsform ist die Flächeneinheit mit einer Deckschicht versehen. Bei der Deckschicht handelt es sich um eine Verschleißschicht, die die Oberseite der Flächeneinheit bildet.

Die Deckschicht kann ein- bzw. mehrlagig ausgebildet sein. Die Deckschicht kann beispielsweise aus einer Metalllegierung, wie z.B. aus einer Aluminium-Legierung, gefertigt sein. Vorzugsweise wird sie aus einem glasfaserverstärkten Kunststoff und/oder einem Werkstoff aus der Gruppe der aromatischen Polyamide (z.B. Aramid) ausgebildet sein. Die Deckschicht kann den Hybridkern bzw. die oberste Kernschicht des Hybridkerns vor einer Abnutzung schützen und die Sandwich- bzw. Verbundkonstruktion insgesamt versteifen.

Demnach kann die Flächeneinheit mindestens eine erste Faserlage bzw. Deckschichtlage, die auf der der Auflageschicht abgewandten Seite der zweiten Kernschicht angeordnet ist, aufweisen, wobei die erste Deckschichtlage aus faserverstärktem Kunststoff, insbesondere glasfaserverstärktem Kunststoff, eine erste Faserausrichtung aufweist. Bei der ersten Deckschichtlage kann es sich demnach um eine erste Faserlage aus Glasfaser und/oder Aramid handeln. Die erste Deckschichtlage bzw. die Deckschicht ist mit der zweiten Kernschicht vorzugsweise durch Stoffschluss verbunden.

Die Deckschicht kann des Weiteren mindestens eine zweite Faserlage bzw. zweite Deckschichtlage, die auf der ersten Deckschichtlage angeordnet ist, aufweisen, wobei die zweite Deckschichtlage aus faserverstärktem Kunststoff, insbesondere glasfaserverstärktem Kunststoff, eine zweite Faserausrichtung aufweist, wobei sich die erste Faserausrichtung der ersten Deckschichtlage vorzugsweise um mindestens 20 Grad oder um mindestens 30 Grad oder um mindestens 40 Grad oder um mindestens 45 Grad und um maximal 90 Grad von der zweiten Faserausrichtung unterscheidet.

Die Gesamtdicke der Deckschicht, d.h. die Gesamtdicke aller Deckschichtlagen kann 0,1 bis 1,0 mm, insbesondere 0,2 bis 0,8 mm, insbesondere 0,4 bis 0,7 mm, insbesondere 0,6 mm, betragen. Vorzugsweise hat die Deckschicht bzw. die Deckschichtlagen im Verhältnis zur Gesamtdicke der Flächeneinheit nur eine geringe Dicke, z.B. weniger als 15 %, insbesondere weniger als 10 %, insbesondere weniger als 8 % der Gesamtdicke.

Die kunstharzdurchsetzte Schaumstoffschicht kann eine Dicke von 2,00 mm bis 12,00 mm, insbesondere von 3,00 mm bis 10,00 mm aufweisen. Die Angaben der Schaumstoffschichtdicken beziehen sich auf die Schaumstoffschicht im unkomprimierten Bereich des Hybridkerns, d.h. die Angaben der Schaumstoffschichtdicken betreffen insbesondere nicht den seitlichen (schaumstofffreien) Randbereich sowie den Übergangsbereich des Hybridkerns. Vorzugsweise hat die Schaumstoffschicht im Verhältnis zur Dicke der gesamten Flächeneinheit eine große Dicke bzw. einen großen Anteil an der Gesamtdicke, z.B. mehr als 20 %, insbesondere mehr als 30 %, insbesondere mehr als 40 %, insbesondere mehr als 45 %, der Gesamtdicke. Insofern können deutlich leichtere Flächeneinheiten hergestellt werden, da das Gewicht der Schaumstoffschicht im Vergleich zu den anderen Kernschichten bzw. im Vergleich zu der Auflageschicht relativ gering ist.

In eine Ausführungsform umfasst die Montageeinrichtung mehrere Abschnitte, beispielsweise mindestens ein Seitenteil und eine Grundplatte. Im eingebauten Zustand ist, dass Seitenteil gegenüber der Grundplatte geneigt, so dass dieses auf Grund der geringeren Belastungen dünner, beispielsweise um mindestens 20 oder 30 Prozent, ausgeführt werden kann. Entsprechend dünner kann der Schaumstoffkern dimensioniert werden. Die Schaumstoffschicht der Grundplatte kann eine Dicke von 6,00 mm bis 12,00 mm, insbesondere von 8,00 mm bis 10,00 mm aufweisen.. Die Schaumstoffschicht des Seitenteils kann eine Dicke von 2,00 mm bis 6,00 mm, insbesondere von 3,00 mm bis 5,00 mm aufweisen.

In einer Ausführungsform der Erfindung ist es denkbar, dass die Schaumstoffschicht aus mehreren Schaumstofflagen besteht bzw. mehrere Schaumstofflagen umfasst. Die einzelnen Schaumstofflagen können im Vergleich zueinander unterschiedlichen Dicken aufweisen.

Vorzugsweise sind die einzelnen Schaumstofflagen, die unterschiedliche Dicken aufweisen, derart zueinander angeordnet, dass die Dicken zur Schaumstoffschichtmitte hin zunehmen. Mit anderen Worten nehmen die Dicken der Schaumstofflagen ausgehend von der Schaumstoffschichtmitte nach außen hin ab. Vorzugsweise sind die Schaumstofflagen symmetrisch zueinander angeordnet. Zu in der Schaumstoffschicht mittig angeordneten Lage können beidseitig Schaumstofflagen mit einer ersten Dicke angeordnet bzw. platziert sein, wobei die zweite Dicke von äußeren Schaumstofflagen geringer als die erste Dicke ist.

Die Schaumstofflagen der Schaumstoffschicht können durch Stoffschluss miteinander verbunden sein. Insbesondere sind die Schaumstofflagen durch den Auftrag und das Aushärten eines Kunstharzes miteinander verbunden. Der Anteil der Harzfüllung in der Schaumstoffschicht kann 20 % - 60 %, insbesondere 30 % - 50 %, insbesondere 40 %, betragen. Mit Hilfe einer derart gebildeten Schaumstoffschicht wird eine Stützstruktur zur Verfügung gestellt, die eine besonders hohe Druckfestigkeit aufweist. Mit Erhöhung des Harzanteils steigt die Druckfestigkeit an.

In einer weiteren Ausführungsform der Erfindung sind zwischen einzelnen, vorzugsweise zwischen mehreren, Schaumstofflagen Lagen aus faserverstärktem Kunststoff, insbesondere aus kohlenstofffaserverstärktem Kunststoff, eingelagert. Mit Hilfe einer derart gebildeten Schaumstoffschicht wird eine Stützstruktur zur Verfügung gestellt, die eine besonders hohe Druckfestigkeit aufweist. Bei der Ausbildung einer derartigen Schaumstoffschicht kann das Verbinden der einzelnen Schaumstofflagen und den Lagen aus faserverstärktem Kunststoff ebenfalls durch Stoffschluss erfolgen. Vorzugsweise sind die Schaumstofflagen und dazwischen eingelegten Lagen aus faserverstärktem Kunststoff durch den Auftrag und das Aushärten eines Kunstharzes miteinander verbunden. Der Anteil der Harzfüllung in der Schaumstoffschicht kann 2 % - 6 %, insbesondere 3 % - 5 %, insbesondere 4 %, betragen. Die Schaumstoffschicht ist demnach relativ leicht, kann jedoch sehr hohen Druckbelastungen Stand halten. Durch das Einbringen zusätzlicher Lagen aus faserverstärktem Kunststoff können auf eine Flächeneinheit wirkende punktuelle Belastungen gleichmäßiger in der Schaumstoffschicht verteilt werden.

Der Randbereich einer Flächeneinheit, die eine Schaumstoffschicht mit mehreren Schaumstofflagen umfasst, kann verdichtet und/oder gequetscht ausgebildet sein.

Des Weiteren ist es denkbar, dass mindestens eine Schaumstofflage oder mehrere Schaumstofflagen oder alle Schaumstofflagen der Schaumstoffschicht nicht bis in den Randbereich oder die Randbereiche der Flächeneinheit ragen. D.h. es ist auch die Ausbildung eines schaumstofffreien Randbereichs oder eines Randbereichs mit abnehmender Schaumstoffschichtdicke denkbar.

Die Flächeneinheit kann eine Dicke bzw. eine Gesamtdicke von 5,0 mm bis 20,00 mm, insbesondere von 7,0 mm bis 15,0 mm, insbesondere von 8,0 mm bis 12,0 mm, insbesondere von 7,6 mm, aufweisen. Die Dicke der Flächeneinheit kann aber auch erfindungsgemäß wie vorab beschrieben variieren. Hier kann sich eine Maximaldicke von 5,0 mm bis 20,00 mm, insbesondere von 7,0 mm bis 15,0 mm, insbesondere von 8,0 mm bis 12,0 mm, insbesondere von 7,6 mm, ergeben.

Die Flächeneinheit kann neben den beschriebenen schaumstofffreien Randbereichen und/oder den Randbereichen, in denen die Schaumstofflagen stark komprimiert oder sehr dünn ausgeführt sind, auch Auflagebereiche aufweisen, die einen ähnlichen oder identischen strukturellen Aufbau haben, wie dies vorhergehend unter Bezug auf die Randbereiche beschrieben wurde. Die Auflagebereiche sind vorzugsweise derart angeordnet, dass sie sich mit der Struktur des Flugzeugs verbinden lassen. Entsprechende Auflagebereiche können auch an den Stellen der Flächeneinheit vorgesehen sein an denen die Funktionseinrichtung und/oder die Verstärkungseinrichtungen montierbar sind. Die Auflagebereiche können abschnittsweise zur Aufnahme von Schraubeinrichtungen, z.B. in Form von Bohrungen, durchbrochen sein.

In einer Ausführungsform sind diese Auflagebereiche im Querschnitt aus Faserlagen und Harz gebildet, wobei kein Schaumstoffkern vorgesehen ist. Je nach Anwendungsfall, kann im Auflagebereich die Lagenanzahl wie bereits erläutert erhöht werden, um die Stabilität zu verbessern.

Die Flächeneinheiten, die zuvor beschrieben wurden, sind insbesondere zur Montage im Bodenbereich ausgebildet. Weiterhin ist es aber auch möglich, die Flächeneinheit zur Montage im Seiten- und Deckenbereich auszubilden, so dass in einfacherer Weise als bisher größere Abschnitte von Flächeneinheiten zur Verkleidung von Decken und Wänden im Frachtraum in diesen einbringbar und montierbar sind. Hierzu ist es von Vorteil, wenn die Flächeneinheiten definierte Knickabschnitte aufweisen, in welchen steif ausgebildete Planabschnitte gegeneinander abgewinkelt im Flugzeug montierbar sind. Dies gilt natürlich auch für die Bodenabschnitte, die üblicherweise in ihren Seitenbereichen aufgrund der Wölbung des tonnenförmigen Flugzeugrumpfes abgewinkelte Abschnitte aufweisen.

Die beschriebenen Auflagebereiche können die Planabschnitte bilden und/oder entlang von Knickabschnitten vorgesehen sein. Die Knickabschnitte können durch ein Elastomer flexibel ausgestaltet sein. In einer Ausführungsform umfasst die beschriebene Flächeneinheit mindestens einen Elastomerstreifen zur Bildung eines Knickabschnitts. Der Elastomerstreifen kann bei einem Aufbau der Flächeneinheit als Faserverbundwerkstoff einlaminiert werden. Es ist möglich, anstelle des beschriebenen Schaumstoffkerns einen Elastomerstreifen zur Bildung des Knickabschnitts vorzusehen. Ober- und unterhalb des Elastomerstreifens können also Faserlagen vorgesehen sein. Es ist erfindungsgemäß möglich, einige oder alle der Faserlagen oberhalb und/oder unterhalb des Elastomerstreifens zu unterbrechen. Vorzugsweise wird in den Bereichen des Elastomerstreifens weniger Harz oder kein Harz in den Aufbau eingebracht. Zur Herstellung des Knickabschnitts kann zwischen die Faserlagen ein nicht-vulkanisierter oder nur teilweise vulkanisierter (synthetischer) Kautschuk eingelegt werden, der im Aushärtungsprozess des vorgesehenen Harzes vulkanisiert wird.

Auch die beschriebene Dichtlippe kann entsprechend hergestellt werden. Hierfür wird ein (synthetischer) Kautschuk am Rand der Flächeneinheit, vorzugsweise die Faserlagen überragend, eingelegt und beim Aushärten vulkanisiert. Die Dichtlippe kann auch nach obenhin oder nach untenhin ausgebildet werden, indem der Kautschuk, vorzugsweise in Streifenform, oben oder unten auf die Faserlagen aufgelegt wird.

Nachfolgend werden Ausführungsformen der Erfindung anhand von Abbildungen näher erläutert. Hierbei zeigen
- Fig. 1: eine perspektivische Teil-Darstellung eines Flugzeug-Frachtraumes mit Flächeneinheiten an Boden und Decke,
- Fig. 2: Schnittansicht des Bereiches II aus Fig. 1,
- Fig. 3: eine schematisierte Darstellung einer "Nietmutter",
- Fig. 4: einen stark schematisierten Querschnitt durch einen Flugzeugrumpf mit Frachtraum,
- Fig. 5: eine vergrößerte Darstellung des Bereiches V aus Fig. 4,
- Fig. 6: eine Explosionsdarstellung der Anordnung nach Fig. 5,
- Fig. 7: eine Darstellung ähnlich der nach Fig. 6 jedoch zur Erläuterung einer weiteren Ausführungsform der Erfindung,
- Fig. 8: eine weite Flächeneinheit zur Montage in einem Flugzeug-Frachtraum,
- Fig. 9: einen schematischen Querschnitt durch die Flächeneinheit aus Fig. 8,
- Fig. 10: einen schematischen Lagenaufbau des Randbereichs einer Flächeneinheit,
- Fig. 11: einen schematischen Lagenaufbau eines Abschnitts einer Flächeneinheit, umfassend einen Hybridkern.

In der nachfolgenden Beschreibung werden für gleiche und gleichwirkende Teile dieselben Bezugsziffern verwendet.

In einem Flugzeugrumpf ist eine Außenhaut 1 durch Spanten 2 definiert befestigt, wobei Querträger 3 an den Spanten 2 ebenso befestigt sind, wie Längsträger 4.

Auf den Querträgern 3 ruht der eigentliche Frachtraumboden.

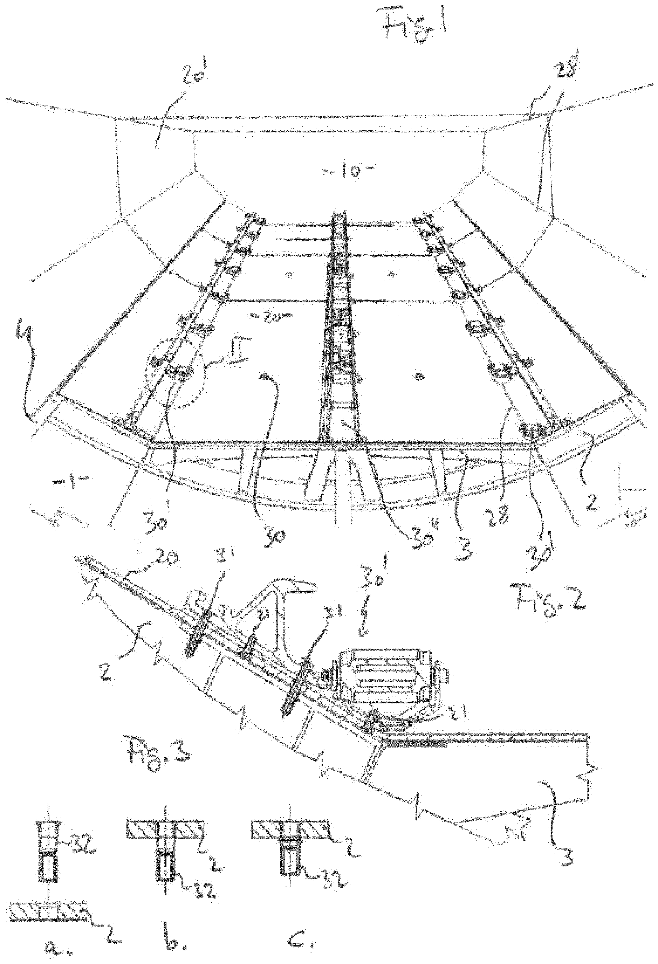

In der Mitte ist eine Rollenbahn 30" und seitlich Rollenbahnen 30' vorgesehen. Flächeneinheiten 20 bilden einen Boden des Frachtraums 10 und Flächeneinheiten 20' sind zur Bildung von Wänden und Decken des Frachtraums 10 an oberen Querträgern 3' (siehe Fig. 3) befestigt. Hierbei sind plane Abschnitte über Knickabschnitte 28, 28' derart miteinander verbunden, dass die Flächeneinheiten 20 zur Bildung des Frachtraumbodens ebenso wie die Flächeneinheiten 20' zur Bildung der Seitenwände und Decken des Frachtraums einheitlich handhabbar sind, was deren Montage insbesondere unter den beengten Verhältnissen im Inneren eines Flugzeugs erheblich erleichtert.

Nachfolgend wird die Montage einer Flächeneinheit 20 einschließlich daran befestigter Funktionseinrichtungen 30, 30' anhand der Fig. 2-6 näher erläutert.

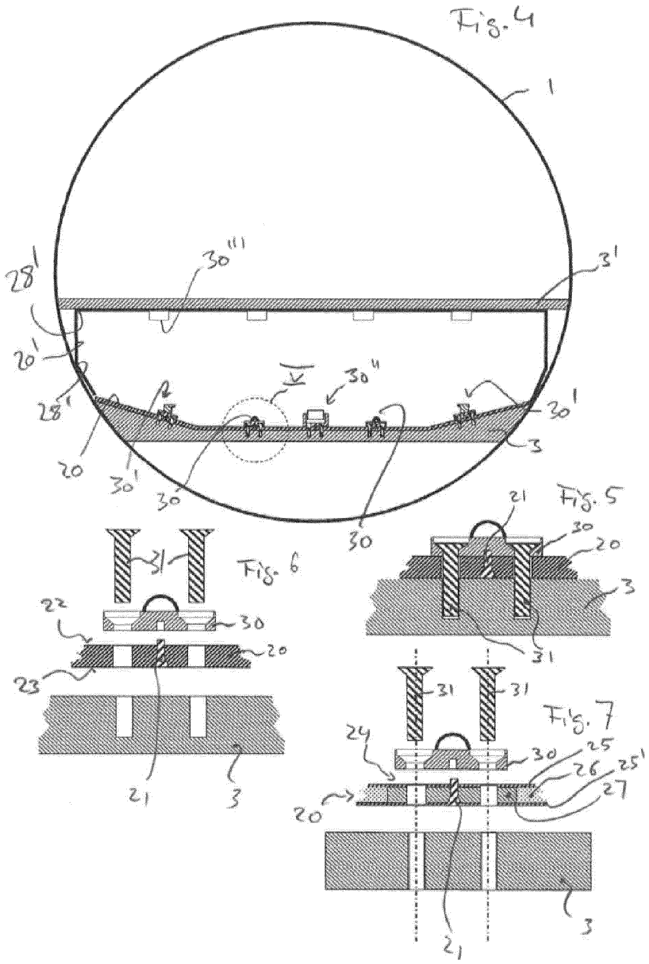

Zunächst werden außerhalb des Flugzeugs auf entsprechenden Montageeinrichtungen Funktionseinrichtungen 30, 30', 30" (in Fig. 2 ein Rollenelement 30', in Fig. 5/6 eine Verzurröse 30) mittels einer Fixierschraube 21 an einer Flächeneinheit 20 befestigt. Wenn eine Flächeneinheit 20 mit allen in ihrem Bereich vorgesehenen Funktionseinrichtungen 30, 30', 30" versehen ist, wird sie in den Frachtraum 10 verbracht und dort so ausgerichtet, dass die Befestigungsbohrungen der Funktionseinrichtungen 30, 30', 30", welche mit den entsprechenden Durchgangsbohrungen in der Flächeneinheit 20 fluchten, über den Gewindebohrungen im Querträger 3 oder im Spant 2 zu liegen kommen. Dies erfordert natürlich eine vorherige entsprechende Planung und exakte Ausrichtung der vorzunehmenden Bohrungen und Befestigungspunkte, jedoch ist dies "normales Handwerkszeug" im Flugzeugbau. An Stelle von Gewindebohrungen werden vorzugsweise Nietmuttern 32 verwendet, die über Druckluftwerkzeuge im Spant 2 oder im Querträger 3 drehfest fixierbar sind, wie dies in den Schnitten a-c der Fig. 3 gezeigt ist.

Sobald die Flächeneinheiten 20 mit den darauf montierten Funktionseinrichtungen 30, 30' im Flugzeugfrachtraum 10 relativ zu den Querträgern 3, den Spanten 2 usw. korrekt ausgerichtet sind, können sie über Befestigungsschrauben 31 mit den tragenden Strukturen des Flugzeugs fest verbunden werden. Es wird auf Fig. 2 und 5 verwiesen, welche den prinzipiellen Aufbau zeigen.

Ähnliches gilt für die Flächeneinheiten 20' zur Bildung von Seitenwänden und Deckenflächen des Frachtraums 10, die an oberen Querträgern 3' befestigt werden. Hierbei sind natürlich andere Funktionseinrichtungen 30'" vorgesehen, z.B. Beleuchtungseinrichtungen oder auch wieder Verzurr-Einrichtungen.

Wichtig für das Verständnis der hier gezeigten Montageeinrichtung ist also die Tatsache, dass zunächst eine Funktionseinrichtung 30, 30', 30", 30'" auf einer Oberseite 22 der Flächeneinheit 20 so montiert wird, dass die Fixiereinrichtung, hier eine Fixierschraube 21, von einer Unterseite 23 der Flächeneinheit 20 her zugänglich ist. Erst dann wird die Flächeneinheit 20 mitsamt der Funktionseinrichtung 30, 30', 30", 30'" auf der tragenden Struktur, hier einem Querträger 3 oder einem Spant 2, des Flugzeugs befestigt. Dadurch ist gewährleistet, dass die Flächeneinheit 20 nicht die Last aufnehmen muss, welche auf die Funktionseinrichtung 30 einwirkt. Andererseits hält aber die Funktionseinrichtung 30 die Flächeneinheit 20 auf dem Querträger 3 bzw. einer entsprechenden Befestigungsstruktur.

Die Flächeneinheit 20 wird vorzugsweise als Verbundkörper in Sandwich-Bauweise aufgebaut, wie dies in Fig. 7 angedeutet ist. Es werden hierfür Deckflächen 25, 25' z.B. aus faserverstärktem Kunststoff über einen Schaumstoffkern 26 miteinander verbunden, woraus eine sehr leichte und dennoch stabile Struktur resultiert.

An denjenigen Stellen, an welchen Funktionseinrichtungen 30 zu montieren sind, wird die Struktur der Flächeneinheit 20 bzw. deren Innenaufbau dahingehend verändert, dass z.B. Verstärkungsmaterial 27 eingesetzt wird. Es kann also dann nicht mehr geschehen, dass der bei derartigen Belastungen zu fragile Schaumstoffkern 26 zusammengedrückt oder sonst wie deformiert wird. Natürlich ist es auch möglich, die Bereiche der Flächeneinheit 20 in ihrer Form, z.B. in ihrer Dicke in denjenigen Bereichen zu verändern, in welchen Funktionseinrichtungen 30 vorgesehen werden.

Weiterhin ist es von Vorteil, wenn in die tragenden Strukturen, im Beispiel sind hier Querträger 3 gezeigt, nicht direkt Gewinde eingeschnitten werden sondern vielmehr Nietmuttern 32 eingesetzt und mit dem Material der tragenden Struktur so verbunden werden, dass die Befestigungsschrauben 31 hinreichend Halt finden. Dadurch können erheblich höhere Lasten aufgenommen werden.

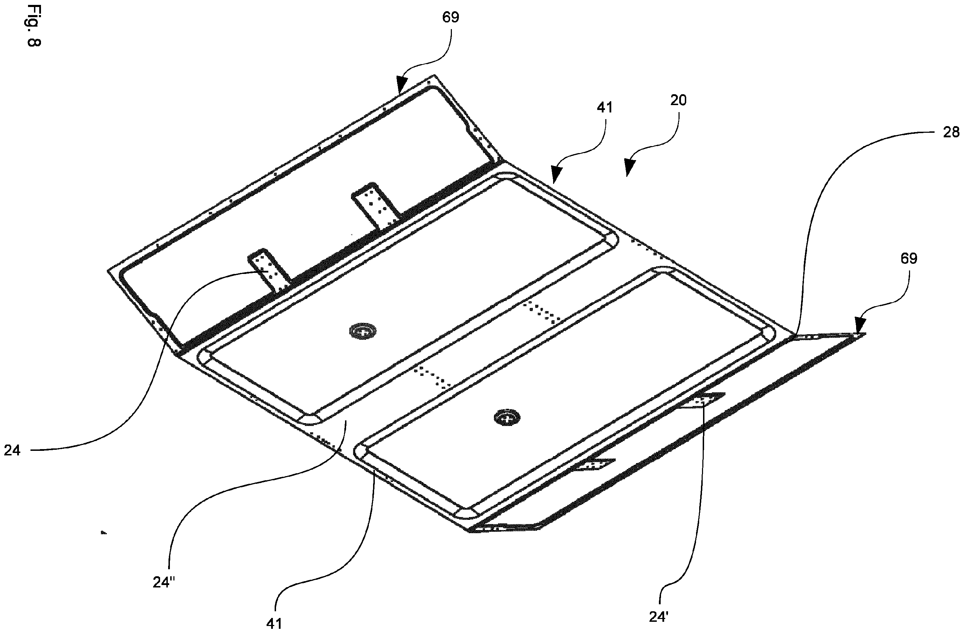

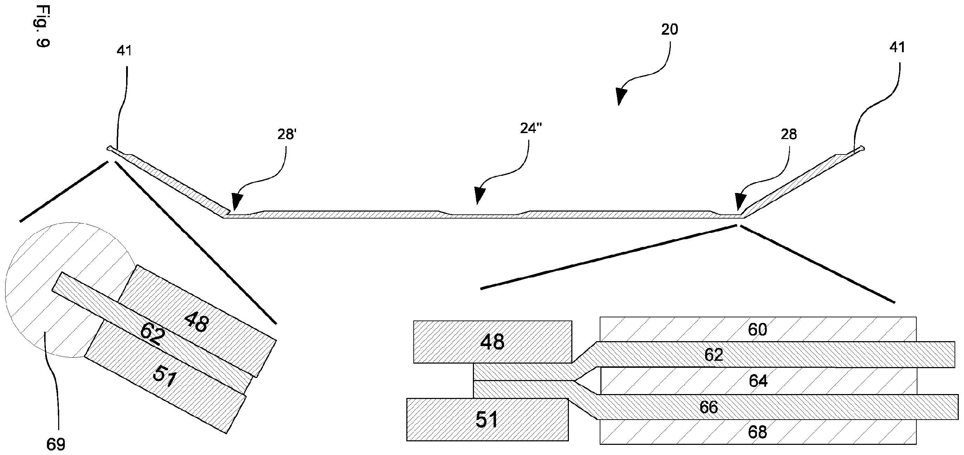

Fig. 8 zeigt eine weitere erfindungsgemäße Montageeinrichtung im uneingebauten Zustand bzw. vor dem Einbau und ohne Funktionseinrichtungen 30, 30', 30", 30"'. Wie anhand der Fig. 9, die einen stark schematisierten Querschnitt durch die Flächeneinheit 20 der Montageeinrichtung gemäß Fig. 8 zeigt ersichtlich, setzt sich die Flächeneinheit 20 aus einer horizontalen Grundplatte sowie zwei gegenüber der Grundplatte angewinkelten Seitenteilen zusammen. Die Seitenteile sind jeweils über die Knickabschnitte 28, 28' mit der Grundplatte verbunden. Die gesamte Flächeneinheit 20 hat einen umlaufenden Randbereich 41, der in der gezeigten Ausführungsform ca. 5 cm breit ist. Die Grundplatte weist einen sich über die gesamte Längsrichtung der Flächeneinheit 20 erstreckenden mittigen Montageabschnitt 24 auf, der ca. eine Breite von 30 cm hat. Der Montageabschnitt 24" ist derart ausgebildet, dass er sich zum Befestigen der Flächeneinheit 20 an der Flugzeugstruktur eignet. Hierfür sind einige Bohrungen vorgesehen. Gleichzeitig lassen sich, wie bereits unter Bezugnahme auf Fig. 1 erläutert, Funktionseinrichtungen 30" in diesen Montageabschnitt 24" montieren. Bei den Funktionseinrichtungen 30" handelt es sich vorzugsweise, wie ebenfalls in Fig. 1 gezeigt, um eine Rollenbahn.

Die Frachteinheit 20 weist weiterhin vier Montageabschnitte 24, 24' an den Seitenteilen der Flächeneinheit 20 auf. Diese Montageabschnitte 24, 24' sind ca. 10 - 15 cm breit und ca. 30 cm lang. Auch in den Montageabschnitten 24, 24' lassen sich Funktionseinrichtungen, beispielsweise die Funktionseinrichtungen 30' aus Fig. 1 montieren.

An den äußeren Rändern der Seitenteile befinden sich jeweils Gummilippen 69, die es ermöglichen, eine gas- und/oder wasserdichte Verbindung zu weiteren Kanälen, beispielsweise der Flächeneinheit 20' aus Fig. 1 herzustellen.

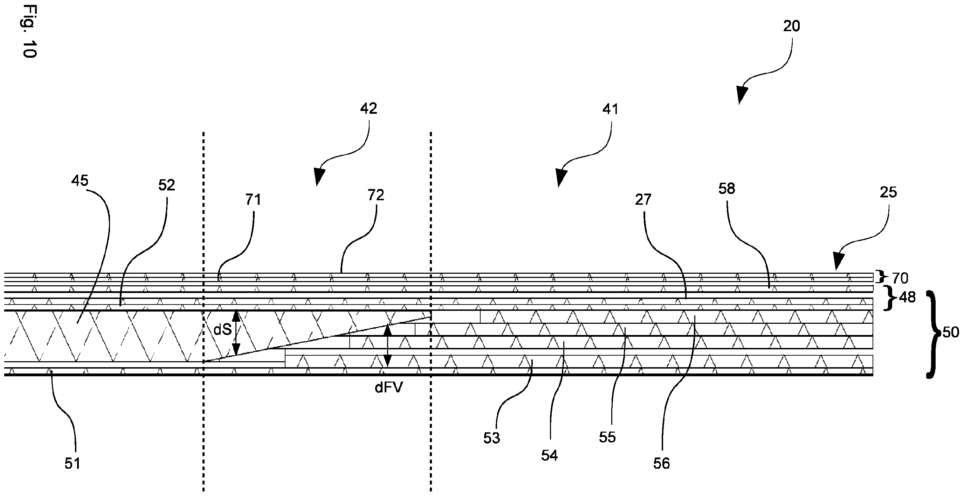

Fig. 10 zeigt in schematischer Darstellung eine weitere Ausführungsform des Randes einer erfindungsgemäßen Flächeneinheit 20 für einen Frachtraum 10.

Die Flächeneinheit 20 umfasst einen Hybridkern 50, welcher eine kunstharzdurchsetzte Schaumstoffschicht 45 (=Schaum 15) aufweist, die zwischen einer ersten Kernschicht 51 aus kohlenstofffaserverstärktem Kunststoff und einer zweiten Kernschicht 48 aus kohlenstofffaserverstärktem Kunststoff eingelagert ist.

Der Hybridkern 50 weist, wie gemäß geschweifter Klammer dargestellt, demnach mehrere Schichten mit mehreren Faserlagen auf.

Im Querschnitt ist zu erkennen, dass der Hybridkern 50 einen seitlichen schaumstofffreien Randbereich 41 umfasst. Der Randbereich 41 weist vorzugsweise kohlenstofffaserverstärkten Kunststoff auf, wobei die Schaumstoffschicht 45 nicht bis in den Randbereich 41 reicht. Des Weiteren ist ein Übergangsbereich 42 dargestellt, welcher sich an den Randbereich 41 anschließt. Vorzugsweise weist der Hybridkern 50 eine rechteckförmige Grundform auf, so dass der Randbereich 41 vorzugsweise an mehreren Seiten, vorzugsweise an allen vier Seiten, ausgebildet ist. Demnach kann ein vollumfänglicher Randbereich 41 aus faserverstärktem Kunststoff, insbesondere kohlenstofffaserverstärktem Kunststoff, ausgebildet sein, welcher einen äußeren Rahmen bildet.

An diesen äußeren Rahmen, nämlich den schaumstofffreien Randbereich 41, schließt sich vorzugsweise ein Übergangsbereich 42 an. Dieser ist vorzugsweise ebenfalls an allen Randbereichen 41 eines Hybridkerns 50 anliegend ausgebildet, d.h. der Übergangsbereich 42 bildet ebenfalls eine Rahmenform, welche innerhalb des Rahmens des äußeren Randbereichs 41 ausgebildet ist. Der Übergangsbereich 42 weist sowohl die Schaumstoffschicht 45 als auch faserverstärkten Kunststoff 46, insbesondere kohlenstofffaserverstärkten Kunststoff, auf. Die Dicke dS der Schaumstoffschicht 45 nimmt im Übergangsbereich 42 zum schaumstofffreien Randbereich 41 hin kontinuierlich ab. Demnach bildet die Schaumstoffschicht 45 im Übergangsbereich 42 eine Dreiecksform bzw. Rampenform, so dass die Dicke dS der Schaumstoffschicht 45 kontinuierlich abnimmt. Die Dicke dFV bzw. die Lagenanzahl von Faserlagen 53, 54, 55 des faserverstärkten Kunststoffs 46 nimmt im Übergangsbereich 42 zum seitlichen schaumstofffreien Randbereich 41 hin schrittweise zu.

Der faserverstärkte Kunststoff 46 des Übergangsbereichs 42 besteht gemäß Ausführungsbeispiel in Fig. 10 aus mehreren Faserlagen, nämlich aus der ersten, zweiten und dritten Randfaserlage (43, 44, 45). Aufgrund der unterschiedlichen Längen der drei Randfaserlagen (43, 44, 45) nimmt die Gesamtdicke dFV des faserverstärkten Kunststoffs 46 im Übergangsbereich 42 schrittweise zu.

Der seitliche schaumstofffreie Randbereich 41 wird im dargestellten Beispiel aus acht Lagen gebildet, welche aus faserverstärktem Kunststoff, nämlich kohlenstofffaserverstärktem Kunststoff, bestehen. Dabei handelt es sich um die erste Kernschicht 51 sowie um die drei Faserlagen 52, 57, 58 der zweiten Kernschicht 48. Außerdem sind im Randbereich 41 vier Randfaserlagen, nämlich die erste (53), zweite (54), dritte (55) und vierte (56) Randfaserlage ausgebildet.

Auf dem Hybridkern 50 ist eine Deckschicht 40, die eine erste Deckschichtlage 41 und eine zweite Deckschichtlage 42 umfasst, vorgesehen. Die erste Deckschichtlage 41 ist auf der der Auflageschicht 30 abgewandten Seite der obersten Faserlage 48 angeordnet, wobei die erste Deckschicht 41 aus glasfaserverstärktem Kunststoff eine erste Faserausrichtung VF1 aufweist und mit der obersten Faserlage 48 bzw. der zweiten Kernschicht 48 durch Stoffschluss) verbunden ist.

Die zweite Deckschichtlage 42 ist auf der ersten Deckschichtlage 41 angeordnet und besteht ebenfalls aus glasfaserverstärktem Kunststoff und weist eine zweite Faserausrichtung VF2 auf, wobei sich die erste Faserausrichtung VF1 um beispielsweise 45 Grad von der zweiten Faserausrichtung VF2 unterscheidet.

Im Zusammenhang mit der Darstellung in Fig. 10 wird darauf hingewiesen, dass es sich lediglich um eine schematische Explosionsdarstellung eines Teilabschnitts einer erfindungsgemäßen Flächeneinheit 20 handelt. D.h., die dargestellten Freiräume, wie bspw. zwischen der Deckschicht 40 und der Faserlage 28 oder zwischen den Faserlagen 47 und 48, sind tatsächlich bei einer fertig hergestellten Flächeneinheit 20 nicht ausgebildet.

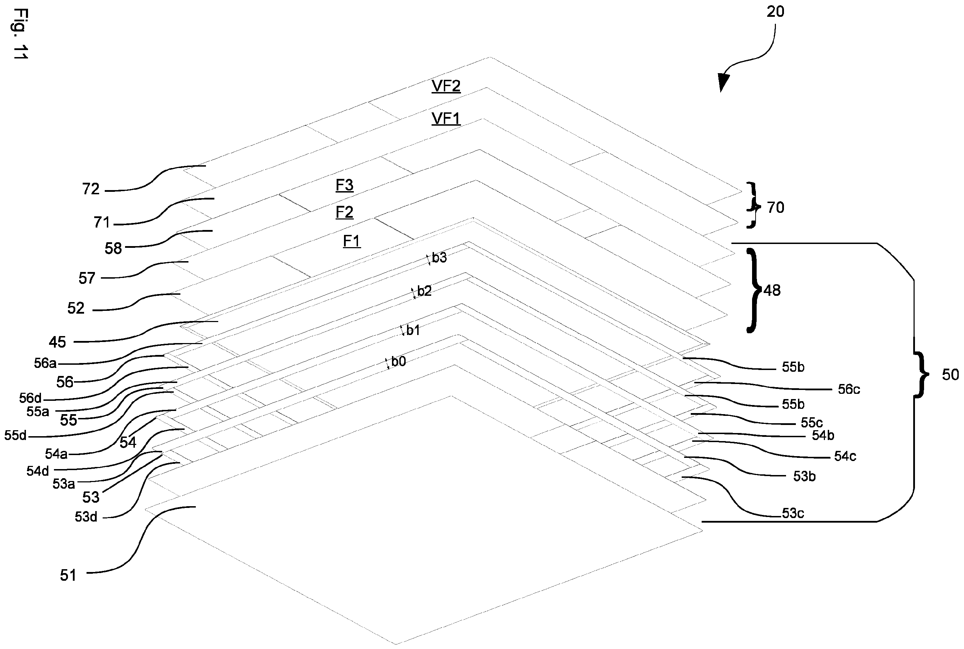

In Fig. 11 zeigt ein Beispiel, wie ein Schaumstoffkern mit einem reinen Faserrahmen umgeben werden kann. Mit der entsprechenden Technik lassen sich komplexere Aufbauten, wie diese beispielsweise zur Herstellung der Flächeneinheit 20 aus Fig. 8 notwendig sind, erzeugen. Die einzelnen Kernschichten und Faserlagen sind schematisch im nichtverbundenen Zustand dargestellt. Der Hybridkern 50 ist in diesem Beispiel mehrschichtig und umfasst die kunstharzdurchsetzte Schaumstoffschicht 45, die zwischen einer ersten Kernschicht 51 aus kohlenstofffaserverstärktem Kunststoff und einer zweiten Kernschicht 48 aus kohlenstofffaserverstärktem Kunststoff eingelagert ist.

Der Hybridkern 50 umfasst eine erste Randfaserlage 53 aus kohlenstofffaserverstärkten Kunststoff, wobei die erste Randfaserlage 53 zwischen der ersten Kernschicht 51 und der Schaumstoffschicht 45 eingelagert ist und streifenförmig zumindest abschnittsweise die Randabschnitte der ersten Kernschicht 51 bedeckt. Die streifenförmig ausgebildete erste Randfaserlage 53 bildet mit den vier Faserstreifen 53a, 53b, 53c und 53d einen Rahmen, welcher demnach die Randabschnitte der ersten Kernschicht 51 bedeckt.

Der Hybridkern 50 umfasst des Weiteren eine zweite Randfaserlage 54 aus kohlenstofffaserverstärktem Kunststoff, wobei die zweite Randfaserlage 54 zwischen der ersten Randfaserlage 53 und dem Schaumstoff 45 eingelagert ist und streifenförmig zumindest abschnittsweise die äußeren Randabschnitte der ersten Randfaserlage 53 bedeckt. Demnach bildet die streifenförmige zweite Randfaserlage wiederum mit den vier Faserstreifen 54a, 54b, 54c und 54d einen Rahmen, welcher auf dem Rahmen bzw. die den Rahmen bildenden Faserstreifen der ersten Randfaserlage 53 aufgelegt wird. Die Streifenbreite b1 der zweiten Randfaserlage 54 ist geringer als die Streifenbreite b0 der ersten Randfaserlage 53, so dass die erste Randfaserlage 53 ausgehend von der Außenkante der zweiten Randfaserlage 54 lediglich abschnittsweise bedeckt wird.

Der Hybridkern 50 umfasst des Weiteren eine dritte Randfaserlage 55 aus kohlenstofffaserverstärktem Kunststoff, wobei die dritte Randfaserlage 55 zwischen der zweiten Randfaserlage 54 und der Schaumstoffschicht 45 eingelagert ist und streifenförmig zumindest abschnittsweise die äußeren Randbereiche der zweiten Randfaserlage 54 bedeckt. Die streifenförmig gebildete dritte Randfaserlage 55 bildet somit mit den vier Faserstreifen 55a, 55b, 55c und 55d einen Rahmen, welcher auf die Streifen bzw. den Rahmen der zweiten Randfaserlage 54 aufgelegt wird. Die Streifenbreite b2 der dritten Randfaserlage 55 ist geringer als die Streifenbreite b1 der zweiten Randfaserlage 54, so dass die zweite Randfaserlage 24 ausgehend von der Außenkante der zweiten Randfaserlage 54 lediglich abschnittsweise, also nicht vollständig, von der dritten Randfaserlage 55 bedeckt wird.

Der Hybridkern 50 weist des Weiteren eine vierte Randfaserlage 26 aus kohlenstofffaserverstärktem Kunststoff auf, wobei die vierte Randfaserlage 56 zwischen der dritten Randfaserlage 55 und der Schaumstoffschicht 45 eingelagert ist und streifenförmig zumindest abschnittsweise die äußeren Randabschnitte der dritten Randfaserlage 55 bedeckt. Die streifenförmige vierte Randfaserlage 56 bildet mit den vier Faserstreifen 56a, 56b, 56c und 56d demnach einen Rahmen, welcher auf die Streifen bzw. den Rahmen der dritten Randfaserlage 55 aufgelegt wird. Die Streifenbreite b3 der vierten Randfaserlage 56 ist geringer als die Streifenbreite b2 der dritten Randfaserlage 55. Die dritte Randfaserlage 55 bzw. die den Rahmen bildenden Faserstreifen der dritten Randfaserlage 55 werden ausgehend von der Außenkante der dritten Randfaserlage 55 nur teilweise abgedeckt. Die Streifenbreite b3 der vierten Randfaserlage 56 weist vorzugsweise einen Wert von 30 mm auf.

Die drei Faserlagen 52, 57, 58 bilden die zweite Kernschicht. Die drei Faserlagen 52, 57, 58 weisen unterschiedliche Faserausrichtungen auf, wobei sich die Faserausrichtung F1 der Faserlage 52 vorzugsweise um mindestens 45 Grad von der zweiten Faserausrichtung F2 der weiteren Faserlage 57 unterscheidet. Die weitere Faserlage 58 weist eine Faserausrichtung F3 auf, wobei die Faserausrichtung F3 mit der Faserausrichtung F1 der Faserlage 52 übereinstimmt und sich somit von der Faserausrichtung F2 der Faserlage 57 um mindestens 45 Grad unterscheidet.

Die Schaumstoffschicht 45 weist wabenförmige Aussparungen auf, die es ermöglichen, dass das ausgehärtete Kunstharz der kunstharzdurchsetzten Schaumstoffschicht 45 eine unmittelbare Stoffverbindung zwischen der Schaumstoffschicht 45 und der ersten 51 und zweiten Kernschichten 48, insbesondere der Faserlagen 51-58 herstellt. Insofern ist die von den CFK-Lagen 51-58 ummantelte Schaumstoffschicht 45 besonders gut dazu geeignet, vertikale Lasten aufzunehmen, ohne dass es zu einer Kompression des ausgehärteten Hybridkerns 20 kommt. Das ausgehärtete Kunstharz in den Aussparungen der Schaumstoffschicht 45 bildet also eine Stützstruktur.

Die erste Deckschichtlage 71 ist aus glasfaserverstärktem Kunststoff hergestellt und weist eine erste Faserausrichtung VF1 auf. Vorzugsweise ist die Faserlage 58 mit der ersten Deckschichtlage 71 verbunden. Auf der ersten Deckschichtlage 71 ist eine zweite Deckschichtlage 72 angeordnet, wobei die zweite Deckschichtlage 42 aus glasfaserverstärktem Kunststoff mit einer zweiten Faserausrichtung VF2 besteht. Die erste Faserausrichtung VF1 unterscheidet sich beispielsweise um 45 Grad von der zweiten Faserausrichtung VF2.

Die erste CFK- bzw. Kernschicht 51 und die drei Faserlagen 52, 57 und 58 können jeweils beispielsweise eine Dicke von 0,2 bis 1,0 mm, insbesondere 0,44 mm, haben. Die erste GFK- bzw. Deckschichtlage 71 und die zweite GFK- bzw. Deckschichtlage 72 können jeweils eine Dicke von 0,1 mm bis 0,6 mm, insbesondere 0,3 mm, haben.

Die kunstharzdurchsetzte Schaumstoffschicht 45 kann eine Dicke von 8 mm bis 9 mm haben. Die beschriebene Dicke der Schaumstoffschicht 45 betrifft lediglich den mittleren Bereich des Hybridkerns 50 und nicht die Dicke dS im Übergangsbereich 42.

Die Flächeneinheit 20 weist eine Dicke bzw. Gesamtdicke von 9,0 bis 11,0 mm, insbesondere von 10 mm, auf.

Anhand der Fig. 10 und 11 wurde erläutert, wie sich ein Randbereich für einen schaumstoffverstärkten Hybridkern 50 in effektiver Weise ausbilden lässt. Diese grundsätzliche Technik wird erfindungsgemäß angewandt, um die gesamte Flächeneinheit 20, wie sie beispielsweise in Fig. 8 gezeigt ist, auszubilden. Der dort gezeigte und bereits beschriebene umlaufende Randbereich 41 ist schaumstofffrei und durch entsprechende Faserlagen verstärkt. Für den hier tätigen Fachmann sollte es ohne weiteres ersichtlich sein, dass der in Fig. 10 beschriebene Aufbau des Randbereichs, der noch Hohlräume aufweist, bei einer Kompression zu einer geringeren Schichtdicke führt als der Bereich, der die Schaumstoffschicht 45 umfasst. So lassen sich die in Fig. 9 gezeigten Randbereiche 41 und Montageabschnitte 24, 24', 24" herstellen.

Zusätzlich kann die Technik genutzt werden, um die in Fig. 9 gezeigten Knickabschnitte 28, 28' herzustellen. Hierfür werden in den schaumstofffreien Bereich zwischen die erste und zweite Kernschicht 51, 48 Faserstreifen 62 und 66 eingelegt. Wie in der Fig. 9 in dem schematischen Querschnitt gezeigt, kann zwischen die Faserstreifen 62, 66 ein Gummistreifen 64 eingelegt sein, der die Flexibilität im Knickabschnitt 28 oder 28' herstellt und den Randbereich 41 der Grundplatte mit dem Randbereich 41 des Seitenteils verbindet. Auch an den nach außen weisenden Seiten der Faserstreifen 62, 66 können weitere Gummistreifen 64 vorgesehen werden, so dass sich ein im Wesentlichen gleichstarker Aufbau ergibt, wie dies im Randbereich 41 der Fall ist. Die Faserstreifen 62, 66 und die Kernschichten 48, 51 können mit Harz verklebt sein, das ggf. entstehende Hohlräume ausfüllen kann. Vorzugsweise ist zumindest ein Teilabschnitt des Knickabschnitts 28 bzw. des Knickabschnitts 28' harzfrei, so dass hier eine Verbindung der Seitenteile mit der Grundplatte hergestellt wird, die elastisch ist. Durch diesen besonderen Schichtaufbau lassen sich die Seitenteile gegenüber der Grundplatte flexibel verschwenken und einfacher in den Frachtraum 10 einbauen. Weiterhin ermöglichen die flexiblen Knickabschnitte 28, 28' einen Ausgleich von Toleranzen.

In ähnlicher Art und Weise lassen sich die Gummilippen 69 herstellen. Hierfür wird wiederum an den Randbereichen 41 ein Faserstreifen 62 zwischen den Kernschichten 48, 51 eingelegt. Der Faserstreifen 62 kann über ein Harz mit den faserverstärkten Kernschichten 48, 51 verbunden werden. In der in Fig. 9 gezeigten Ausführungsform ragt der Faserstreifen 62 seitlich über die Kernschichten 48, 51 hinaus und ist an dieser Stelle mit einer im Wesentlichen wulstförmigen Gummilippe 69 versehen.

Das Vorsehen von Gummistreifen, beispielsweise an der Unterseite der Flächeneinheit 20 kann auch an weiteren Stellen, beispielsweise unterhalb des Montageabschnitts 24" sinnvoll sein.

Grundsätzlich lassen sich die Gummistreifen 60, 64, 68 und die Gummilippe 69 gleichzeitig mit der Herstellung der Faserverbundstruktur der Flächeneinheit 20 gewährleisten. Hierfür wird zwischen die einzelnen Faserlagen oder auf die einzelnen Faserlagen synthetischer Kautschuk aufgelegt. Beim Komprimieren und Aushärten findet eine Vulkanisierung des synthetischen Kautschuks statt, so dass sich die beschriebenen Gummistreifen 60, 64, 68 sowie die Gummilippe ergeben.

In dem beschriebenen Ausführungsbeispiel haben die Grundplatte und die Seitenteile eine ähnliche Gesamtdicke. In einem bevorzugten Ausführungsbeispiel sind die Seitenteile deutlich, ca. um 40 %, dünner als die Grundplatte. In den beschriebenen Ausführungsbeispielen umfassen die Flächeneinheiten zahlreiche Kohlenstofflagen. Erfindungsgemäß können einige oder alle dieser lagen durch Glasfaserlagen, insbesondere aus S-Glas, ersetzt werden. Besonders an der Oberseite 22 und an der Unterseite 23 sind Glasfaserlagen zu bevorzugen, da sie gegen Stöße resistent sind. Kohlenstofflagen können gezielt, insbesondere in der zweiten Kernschicht eingesetzt werden, um einen Brand in der Bilge abzuschotten.

### Bezugszeichenliste

- 1: Außenhaut
- 2: Spanten
- 3: Querträger
- 4: Längsträger
- 10: Frachtraum
- 20, 20': Flächeneinheit
- 21: Fixierschraube
- 22: Oberseite
- 23: Unterseite
- 24, 24', 24": Montageabschnitt
- 25, 25': Deckfläche
- 26: Schaum
- 27: Verstärkungsmaterial
- 28, 28': Knickabschnitt
- 30, 30', 30", 30'": Funktionseinrichtungen
- 31: Befestigungsschraube
- 32: Nietmutter
- 40: Deckschicht
- 41: Randbereich
- 42: Übergangsbereich
- 43: Ecke
- 44: Aussparung
- 45: Schaumstoffschicht
- 46: Faserverstärkter Kunststoff
- 48: Zweite Kernschicht
- 50: Hybridkern
- 51: Erste Kernschicht
- 52: Faserlage
- 53: Erste Randfaserlage
- 53a,b,c,d: Faserstreifen der ersten Randfaserlage
- 54: Zweite Randfaserlage
- 54 a,b,c,d: Faserstreifen der zweiten Randfaserlage
- 55: Dritte Randfaserlage
- 55 a,b,c,d: Faserstreifen der dritten Randfaserlage
- 56: Vierte Randfaserlage
- 56 a,b,c,d: Faserstreifen der vierten Randfaserlage
- 57: Faserlage
- 58: Faserlage
- 60, 64, 68: Gummistreifen
- 62, 66: Faserstreifen
- 69: Gummilippe
- 70: Deckschicht
- 71: Erste Deckschichtlage
- 72: Zweite Deckschichtlage

## Patentansprüche

1. Flugzeug-Frachtraum (10), umfassend Tragestrukturen (2, 3, 4), insbesondere Spanten (2) und/oder Querträger (3) und/oder Längsträger (4), eine Montageeinrichtung zum Montieren von Funktionseinrichtungen (30) an definierten Montagestellen der Tragestrukturen (2, 3, 4) im Flugzeug-Frachtraum (10), umfassend mindestens eine Flächeneinheit (20, 20') und eine Vielzahl von Funktionseinrichtungen (30, 30', 30", 30"'), die an der Flächeneinheit (20, 20') derart montiert sind, dass die Flächeneinheit (20, 20') mitsamt daran montierten Funktionseinrichtungen (30, 30', 30", 30"') in den Frachtraum (10) so einsetzbar ist, dass alle Funktionseinrichtungen (30, 30', 30", 30"') im Frachtraum (10) an den definierten Montagestellen zu liegen kommen und ohne Justierung relativ zur Flächeneinheit (20, 20') an den Tragestrukturen (2, 3, 4) des Frachtraums (10) montiert sind,
wobei die Flächeneinheit (20,20') aus faserverstärktem Kunststoffmaterial in Sandwichbauweise aufgebaut ist, wobei die Funktionseinrichtungen (30, 30', 30", 30"') mindestens eine Rollenbahn (30', 30") umfassen, die an den Tragestrukturen (2, 3, 4) so montiert ist, dass Last, die auf die Rollenbahn (30', 30") wirkt, aufgenommen wird.

2. Flugzeug-Frachtraum (10) nach Anspruch 1,
**dadurch gekennzeichnet, dass**
die Funktionseinrichtungen (30) derart ausgebildet sind, dass sie an der Flächeneinheit (20) durch Schraubeinrichtungen (21) befestigbar sind.

3. Flugzeug-Frachtraum (10) nach Anspruch 2,
**dadurch gekennzeichnet, dass**
die Schraubeinrichtung (21) auf einer, der Funktionseinrichtung (30) gegenüberliegenden Seite (23) der Flächeneinheit (20) betätigbar ist.

4. Flugzeug-Frachtraum (10) nach einem der vorhergehenden Ansprüche,
**dadurch gekennzeichnet, dass**
die Flächeneinheit (20, 20') zur Bildung einer gas- und/oder wasserdichten Absperrung zwischen ihrer Oberseite (22) und ihrer Unterseite (23) ausgebildet ist.

5. Flugzeug-Frachtraum (10) nach einem der vorhergehenden Ansprüche,
**dadurch gekennzeichnet, dass**
die Flächeneinheit (20, 20') Dichtlippen umfasst, die an Rändern der Flächeneinheit (20, 20') angeordnet sind.

6. Flugzeug-Frachtraum (10) nach einem der vorhergehenden Ansprüche,
**dadurch gekennzeichnet, dass**
die Flächeneinheit (20) zur Bildung eines begehbaren Bodens ausgebildet ist.

7. Flugzeug-Frachtraum (10) nach einem der vorhergehenden Ansprüche,
**dadurch gekennzeichnet, dass**
die Flächeneinheit einen Hybridkern (50) umfasst, mit:
a. einer ersten Kernschicht (51) aus faserverstärktem Kunststoff;
b. einer zweiten Kernschicht (48) aus faserverstärktem Kunststoff;
c. mindestens einer, vorzugsweise kunstharzdurchsetzten, Schaumstoffschicht (45), die zwischen der ersten und zweiten Kernschicht eingelegt ist, wobei der Hybridkern (50) vorzugsweise einen schaumstofffreien Randbereich zur Herstellung einer, insbesondere flächigen, stoffschlüssigen Verbindung zwischen den Kernschichten (48,51), aufweist.

8. Flugzeug-Frachtraum (10) nach Anspruch 7,
**dadurch gekennzeichnet, dass** die Dicke (dS) der Schaumstoffschicht (45) in einem Übergangsbereich (42) zu dem Randbereich (41) hin abnimmt.

9. Flugzeug-Frachtraum (10) nach einem der Ansprüche 7 oder 8,
**dadurch gekennzeichnet, dass**
in eine Sandwichstruktur der Flächeneinheit (20, 20') faserverstärkte Verstärkungsstreben eingelagert sind.

10. Flugzeug-Frachtraum (10) nach einem der vorhergehenden Ansprüche,
**dadurch gekennzeichnet, dass**
die Flächeneinheit (20) in Abschnitten (24), an denen die Funktionseinrichtungen (30) montierbar oder montiert sind, Verstärkungseinrichtungen (27), insbesondere Verstärkungen gegenüber senkrecht zur Oberfläche und/oder Flächeneinheit (20) wirkenden, mit einem Biegemoment belastenden Kräften, aufweisen.

11. Flugzeug-Frachtraum (10) nach einem der vorhergehenden Ansprüche,
**dadurch gekennzeichnet, dass**
die Flächeneinheiten (20) zur Montage im Bodenbereich ausgebildet sind.

12. Flugzeug-Frachtraum (10) nach einem der Ansprüche 1-6,
**dadurch gekennzeichnet, dass**
die Flächeneinheiten (20') zur Montage im Seiten- und Deckenbereich ausgebildet sind.

13. Flugzeug-Frachtraum (10) nach einem der vorhergehenden Ansprüche,
**dadurch gekennzeichnet, dass**
die Flächeneinheiten (20, 20') definierte Knickabschnitte (28), vorzugsweise in Form von zumindest teilweise elastischen Bereichen, aufweisen, in welchen steif ausgebildete Planabschnitte gegeneinander abgewinkelt im Flugzeug montierbar sind.

14. Verfahren zum Montieren von Funktionseinrichtungen (30, 30', 30", 30"') innerhalb eines Flugzeug-Frachtraums (10), umfassend die Schritte:
a) Befestigen von Funktionseinrichtungen (30, 30', 30", 30"') an vordefinierten Stellen an Flächeneinheiten (20, 20') außerhalb des Flugzeugs, wobei die Flächeneinheiten (20,20') aus faserverstärktem Kunststoffmaterial in Sandwichbauweise aufgebaut sind und die Funktionseinrichtungen (30, 30', 30", 30"') mindestens eine Rollenbahn (30', 30") umfassen;
b) Einbringen der Flächeneinheiten mitsamt den Funktionseinrichtungen (30, 30', 30", 30"') in das Flugzeug;
c) Befestigen jeder Funktionseinrichtung (30, 30', 30", 30"') mitsamt den Flächeneinheiten an Tragestrukturen (2, 3, 4) des Flugzeug-Frachtraums (10) , wobei die Rollenbahn (30', 30") derart befestigt wird, dass Last, die auf die Rollenbahn wirkt, von den Tragestrukturen (2, 3, 4) aufgenommen wird.

## Claims

1. An aircraft cargo hold (10), comprising supporting structures (2, 3, 4), in particular frames (2) and/or cross beams (3) and/or longitudinal beams (4), a mounting device for mounting functional devices (30) at defined mounting positions of the supporting structures (2, 3, 4) within the aircraft cargo hold (10), comprising at least one surface unit (20, 20') and a plurality of functional devices (30, 30', 30", 30"') mounted on the surface unit (20, 20') in such a way that the surface unit (20, 20') together with the functional devices (30, 30', 30", 30"') mounted thereon, can be inserted into the cargo hold (10) in such a way that all of the functional devices (30, 30', 30", 30"') come to lie in the cargo hold (10) at the defined mounting positions and are mounted on the supporting structures (2, 3, 4) of the cargo hold (10) without adjustment relative to the surface unit (20, 20'),
wherein the surface unit (20, 20') is built up in sandwich design from fibre-reinforced plastic material, wherein the functional devices (30, 30', 30", 30"') comprise at least one roller track (30', 30") which is mounted on the supporting structures (2, 3, 4) such that any load acting upon the roller track (30', 30") is absorbed.

2. The aircraft cargo hold (10) according to claim 1,
**characterized in that**
the functional devices (30) are designed such that they are attachable to the surface unit (20) by screw devices (21).

3. The aircraft cargo hold (10) according to claim 2,
**characterized in that**
the screw device (21) is actuatable on a side (23) of the surface unit (20) which is opposite the functional device (30).

4. The aircraft cargo hold (10) according to any one of the preceding claims,
**characterized in that**
the surface unit (20, 20') is designed to form a gas-tight and/or water-tight barrier between its upper side (22) and its lower side (23).

5. The aircraft cargo hold (10) according to any one of the preceding claims,
**characterized in that**
the surface unit (20, 20') comprises sealing lips which are arranged at edges of the surface unit (20, 20').

6. The aircraft cargo hold (10) according to any one of the preceding claims,
**characterized in that**
the surface unit (20) is designed to form an accessible floor.

7. The aircraft cargo hold (10) according to any one of the preceding claims,
**characterized in that**
the surface unit comprises a hybrid core (50) having:
a. a first core layer (51) of fibre-reinforced plastic material;
b. a second core layer (48) of fibre-reinforced plastic material;
c. at least one foam layer (45), preferably interspersed with synthetic resin, which is inserted between the first and the second core layer, wherein the hybrid core (50) preferably has an edge region that is free from foam, for establishing an in particular planar material bond between the core layers (48, 51).

8. The aircraft cargo hold (10) according to claim 7,
**characterized in that**
the thickness (dS) of the foam layer (45) decreases in a transition region towards the edge region (41).

9. The aircraft cargo hold (10) according to any one of claims 7 or 8,
**characterized in that**
fibre-reinforced reinforcement struts are embedded in a sandwich structure of the surface units (20, 20').

10. The aircraft cargo hold (10) according to any one of the preceding claims,
**characterized in that**
in sections (24) to which functional devices (30) are mountable or mounted, the surface unit (20) has reinforcement devices (27), in particular reinforcements against forces acting perpendicular relative to the top surface and/or the surface unit (20) and loading with a bending moment.

11. The aircraft cargo hold (10) according to any one of the preceding claims,
**characterized in that**
the surface units (20) are designed for mounting in the base region.

12. The aircraft cargo hold (10) according to any one of claims 1 to 6,
**characterized in that**
the surface units (20') are designed for mounting in the side and ceiling region.

13. The aircraft cargo hold (10) according to any one of the preceding claims,
**characterized in that**
the surface units (20, 20') comprise defined kink sections (28) preferably in the form of at least partially elastic sections, in which rigidly designed planar sections are mountable at an angle to one another in the aircraft.

14. A method for mounting functional devices (30, 30', 30", 30"') within an aircraft cargo hold (10), comprising the steps of:
a) fastening the functional devices (30, 30', 30", 30"') at predefined positions on surface units (20, 20') outside the aircraft, wherein the surface units (20, 20') are built up in sandwich design from fibre-reinforced plastic material, and the functional devices (30, 30', 30", 30"') comprise at least one roller track (30', 30");
b) inserting the surface units together with the functional devices (30, 30', 30", 30"') into the aircraft;
c) fastening each functional device (30, 30', 30", 30"') together with the surface units to supporting structures (2, 3, 4) of the aircraft cargo hold (10), wherein the roller track (30', 30") is fastened such that any load acting upon the roller track is absorbed by the supporting structures (2, 3, 4).

## Revendications

1. Soute d'avion (10), comprenant des structures portantes (2, 3, 4), en particulier des membrures (2) et/ou des traverses (3) et ou des longerons (4), un dispositif de montage pour le montage de dispositifs fonctionnels (30) à des emplacements de montage définis des structures portantes (2, 3, 4) dans la soute d'avion (10), comprenant au moins une unité de surface (20, 20') et une pluralité de dispositifs fonctionnels (30, 30', 30", 30"') qui sont montés sur l'unité de surface (20, 20') de telle manière que l'unité de surface (20, 20') avec des dispositifs fonctionnels (30, 30', 30", 30"') montés sur celle-ci puisse être insérée dans la soute (10) de telle sorte que tous les dispositifs fonctionnels (30, 30', 30", 30"') viennent se placer aux emplacements de montage définis dans la soute (10) et soient montés sur les structures portantes (2, 3, 4) de la soute (10) sans réglage par rapport à l'unité de surface (20, 20'), sachant que l'unité de surface (20, 20') est réalisée en structure sandwich en matière synthétique renforcée par fibres, sachant que les dispositifs fonctionnels (30, 30', 30", 30"') comprennent au moins un train de rouleaux (30', 30") qui est monté sur les structures portantes (2, 3, 4) de telle sorte qu'une charge qui s'exerce sur le train de rouleaux (30', 30") soit reçue.

2. Soute d'avion (10) selon la revendication 1,
**caractérisée en ce que**
les dispositifs fonctionnels (30) sont constitués de telle manière qu'ils puissent être fixés à l'unité de surface (20) par des dispositifs à vis (21).

3. Soute d'avion (10) selon la revendication 2,
**caractérisée en ce que**
le dispositif à vis (21) est actionnable d'un côté de l'unité de surface (20) opposé au dispositif fonctionnel (30).

4. Soute d'avion (10) selon l'une des revendications précédentes, **caractérisée en ce que**
l'unité de surface (20, 20') est constituée pour former une barrière étanche au gaz et/ou à l'eau entre son côté supérieur (22) et son côté inférieur (23).

5. Soute d'avion (10) selon l'une des revendications précédentes,
**caractérisée en ce que**
l'unité de surface (20, 20') comprend des lèvres d'étanchéité qui sont disposées au niveau de bords de l'unité de surface (20, 20').

6. Soute d'avion (10) selon l'une des revendications précédentes,
**caractérisée en ce que**
l'unité de surface (20, 20') est constituée pour former un sol praticable.

7. Soute d'avion (10) selon l'une des revendications précédentes,
**caractérisée en ce que**
l'unité de surface (20, 20') comprend une âme hybride (50), avec :
a. une première couche d'âme (51) en matière synthétique renforcée par fibres ;
b. une deuxième couche d'âme (48) en matière synthétique renforcée par fibres ;
c. au moins une couche en mousse (45), de préférence lardée de résine synthétique, qui est insérée entre la première et la deuxième couche d'âme, sachant que l'âme hybride (50) présente de préférence une zone de bord exempte de mousse afin de réaliser une liaison par continuité de matière, en particulier plane, entre les couches d'âme (48, 51).

8. Soute d'avion (10) selon la revendication 7,
**caractérisée en ce que**
l'épaisseur (dS) de la couche en mousse (45) diminue dans une zone de transition (42) vers la zone de bord (41).

9. Soute d'avion (10) selon l'une des revendications 7 ou 8,
**caractérisée en ce que**
des haubans de renfort renforcés par fibres sont logés dans une structure sandwich de l'unité de surface (20, 20').

10. Soute d'avion (10) selon l'une des revendications précédentes,
**caractérisée en ce que**
l'unité de surface (20) présente, dans des sections (24) au niveau desquelles les dispositifs fonctionnels (30) sont montables ou montés, des dispositifs de renfort (27), en particulier des renforts par rapport à des forces induisant un moment de cintrage et s'exerçant perpendiculairement à la surface et/ou à l'unité de surface (20).

11. Soute d'avion (10) selon l'une des revendications précédentes,
**caractérisée en ce que**
les unités de surface (20) sont constituées pour le montage au niveau du sol.

12. Soute d'avion (10) selon l'une des revendications 1 à 6,
**caractérisée en ce que**
les unités de surface (20') sont constituées pour le montage au niveau des parois et du plafond.

13. Soute d'avion (10) selon l'une des revendications précédentes,
**caractérisée en ce que**
les unités de surface (20, 20') présentent des sections de pli (28) définies, de préférence sous forme de zones au moins en partie élastiques, dans lesquelles des sections planes constituées de manière rigide sont montables dans l'avion de manière coudée les unes par rapport aux autres.

14. Procédé de montage de dispositifs fonctionnels (30, 30', 30", 30"') à l'intérieur d'une soute d'avion (10), comprenant les étapes de :
a) fixation de dispositifs fonctionnels (30, 30', 30", 30"') à des emplacements définis sur des unités de surface (20, 20') à l'extérieur de l'avion, sachant que les unités de surface (20, 20') sont réalisées en structure sandwich en matière synthétique renforcée par fibres et les dispositifs fonctionnels (30, 30', 30", 30"') comprennent au moins un train de rouleaux (30', 30") ;
b) introduction des unités de surface avec les dispositifs fonctionnels (30, 30', 30", 30"') dans l'avion ;
c) fixation de chaque dispositif fonctionnel (30, 30', 30", 30"') avec les unités de surface sur les structures portantes (2, 3, 4) de la soute d'avion (10), sachant que le train de rouleaux (30', 30") est fixé de telle manière qu'une charge qui s'exerce sur le train de rouleaux soit reçue par les structures portantes (2, 3, 4).
